# FASCICULE DE BREVET EUROPEEN

(11) **EP 3 643 024 B1**
(45) Date de publication et mention de la délivrance du brevet: **28.02.2024**
(21) Numéro de dépôt: 18749430.7
(22) Date de dépôt: 14.06.2018
(51) Int. Cl.: H04L 47/36, H04L 47/22, H04L 47/25

(54) **ÉMISSION ET RÉCEPTION D'UN FLUX DE DONNÉES**
SENDEN UND EMPFANGEN EINES DATENSTROMS
TRANSMISSION AND RECEPTION OF A DATA STREAM

(30) Priorité: 23.06.2017 FR 1755766
(43) Date de publication de la demande: 29.04.2020
(73) Titulaire: Orange, 92130 Issy-les-Moulineaux (FR)
(72) Inventeur: KOUNTOURIS, Apostolos, 92326 Châtillon cedex (FR); SURBAYROLE, Philippe, 92326 Châtillon cedex (FR); DUMAY, Marion, 92326 Châtillon cedex (FR)
(86) Numéro de dépôt international: PCT/FR2018/051402
(87) Numéro de publication internationale: WO 2018/234661

(56) Documents cités:
- WO-A1-02/49291
- David W Petr ET AL: "Priority Discarding of Speech in Integrated Packet Networks", IEEE JOURNAL ON SELECTED AREAS IN COMMUNICATIONS, 30 juin 1989 (1989-06-30), XP055212414, DOI: 10.1109/49.32328 Extrait de l'Internet: URL:http://ieeexplore.ieee.org/ielx1/49/14 02/00032328.pdf?tp=&arnumber=32328&isnumbe r=1402 [extrait le 2015-09-10]

## Description

L'invention se situe dans le domaine des télécommunications.

L'invention se rapporte plus particulièrement à la transmission par un dispositif émetteur et à la réception par un dispositif récepteur, en temps réel et sans interruption, d'un flux de données continu via un réseau de communication.

De nombreux systèmes permettent une telle transmission de données.

Parmi ces systèmes, il existe notamment des systèmes permettant l'envoi à destination d'un ou plusieurs dispositifs de réception de flux de données audiovidéo en temps réel selon un protocole de type « streaming ». Au fur et à mesure de la réception du flux, le dispositif de réception, éventuellement après décodage des données du flux reçu, est apte à afficher les données reçues sur un écran de visualisation du dispositif de restitution. Grâce à ce système, un utilisateur peut ainsi regarder un film diffusé.

Dans ces systèmes, le flux de données est transmis selon un débit prédéfini.

Cependant, la charge du réseau peut varier au cours du temps. Dans les moments où le réseau est chargé, la bande passante disponible pour transmettre ce flux de données est réduite. Ceci peut conduire à des situations où certaines données du flux ne sont pas acheminées jusqu'au dispositif de réception. Ces données sont alors perdues. Ainsi la continuité du flux est rompue. Ceci se traduit par exemple par des images figées ou des sauts brusques sur l'écran du dispositif de réception.

Dans un certain nombre d'applications, cette perte de données peut être préjudiciable pour l'utilisateur du dispositif de réception.

C'est notamment le cas lorsque les données transmises sont des données recueillies par des capteurs puis transférées à un dispositif de réception via un réseau de communication pour traitement. Dans ce type d'application, la perte de continuité est un inconvénient majeur.

Le document WO 02/49291 A1 (NOKIA CORP [FI]; RUUTU JUSSI [FI]) 20 juin 2002 (2002-06-20) décrit un procédé de contrôle d'un flux de paquets de données dans un réseau de communications de données par paquets et les éléments réseau adaptés.

Le document David W Petr ET AL: "Priority Discarding of Speech in Integrated Packet Networks",IEEE JOURNAL ON SELECTED AREAS IN COMMUNICATIONS, 30 juin 1989 (1989-06-30), XP055212414,DOI: 10.1109/49.32328, divulgue un procédé de contrôle de la congestion des réseaux de paquets.

Un des buts de l'invention est de remédier à des insuffisances/inconvénients de l'état de la technique et/ou d'y apporter des améliorations.

A cette fin, l'invention se rapporte à un procédé de transmission, via une liaison de communication, d'un flux de données représentant une deuxième suite ordonnée de valeurs numériques, ladite deuxième suite étant déterminée à partir d'une première suite ordonnée de valeurs numériques représentées respectivement par un nombre prédéfini de bits, une séquence de valeurs numériques consécutives de la deuxième suite, dite deuxième séquence, étant obtenue à partir d'une séquence correspondante de valeurs numériques consécutives de la première suite , dite première séquence,
Selon l'invention, le procédé comporte les étapes suivantes, mises en oeuvre par un dispositif de transmission :
estimation, à un instant courant, d'une valeur représentative d'une charge courante de ladite liaison ;
détermination en fonction de la valeur de charge estimée, d'une deuxième séquence à transmettre au cours d'un intervalle de temps prédéfini suivant ledit instant courant, ladite deuxième séquence étant une première séquence correspondante de la première suite ou une séquence modifiée obtenue par application d'une loi de sélection aux bits de ladite première séquence ;
transmission de ladite deuxième séquence ; et
transmission d'un indicateur de traitement signalant une modification de séquence, en cas de transmission d'une séquence modifiée.

Les données de la première suite sont par exemple des données obtenues par encodage numérique d'une bande radio de largeur donnée.

Cependant, aucune limitation est apportée à la nature de ces données.

Une valeur représentative de la charge courante du réseau, et plus précisément de la liaison de communication, est déterminée à un instant courant. Cette valeur est significative de la capacité du réseau à transporter audit instant courant, des données, sans perte de celles-ci, sur la liaison de communication. En conséquence, cette valeur est dépendante du débit de données pouvant être admis par le réseau à cet instant courant c'est-à-dire de la bande passante disponible pour le transfert de ces données.

De façon connue, la bande passante et en conséquence, le débit disponible pour le transfert des données diminuent lorsque le réseau est perturbé ou congestionné.

Le procédé de transmission permet ainsi de transmettre, sous la forme d'un flux continu, des séquences de données obtenues à partir de séquences de données d'une première suite de données.

En fonction de la valeur de charge estimée, une première séquence considérée est transmise avec ou sans modification.

Une séquence modifiée est une séquence contenant seulement une partie des bits de la première séquence.

La modification permet de réduire le volume de données de la séquence.

Par exemple, dans le cas où il est estimé que le débit est suffisant, toutes les données d'une séquence considérée de valeurs numériques, appelée première séquence, de la première suite sont transmises.

S'il est déterminé que le débit est insuffisant, seule une partie de ces données est transmises.

L'application de la loi de sélection à une première séquence de données permet d'obtenir une séquence de données modifiées, appelée deuxième séquence.

La loi de sélection est une fonction permettant de sélectionner des bits parmi un ensemble de bits et, plus spécifiquement ici des bits d'une première séquence.

La loi de sélection est par exemple une fonction permettant de sélectionner parmi un ensemble de valeurs numériques représentées sur un nombre prédéfini de bits, un nombre prédéfini de valeurs numériques et/ou un nombre prédéfini de bits pour ces valeurs numériques.

Grâce à l'application de la loi de sélection à la première séquence, le volume de données de la deuxième séquence est réduit par rapport à celui de la première séquence. La deuxième séquence est transmise à la place de la première séquence, qui aurait été transmise si un débit suffisant avait été estimé.

Le volume de données réduit est obtenu en diminuant le nombre de valeurs numériques de la première séquence et/ou en diminuant le nombre de bits par valeur numérique.

La diminution du nombre de valeurs numériques est par exemple obtenue par modification d'un taux d'échantillonnage des valeurs numériques, par exemple par décimation.

La diminution du nombre de bits par valeur numérique est par exemple obtenue par arrondi ou troncature.

Une combinaison des deux méthodes (diminution du nombre de valeurs numériques et du nombre de bit de chaque valeur numérique) permet une réduction plus importante du volume des données.

La deuxième séquence est transmise pendant un intervalle de temps prédéfini consécutif au moment de l'estimation. L'adaptation du volume transmis est ainsi effectuée en temps réel.

Ainsi, le procédé permet de diminuer la probabilité que le réseau soit congestionné. Les données transmises ont ainsi plus de chances de parvenir au dispositif destinataire sans perte de la continuité du flux.

La réduction du volume de données transmises permet de diminuer le débit du flux afin qu'il soit inférieur ou égal à la bande passante disponible.

Un indicateur de traitement est transmis en association avec la ou les séquences transmises. Cet indicateur permet à un dispositif de réception apte à recevoir le flux transmis, d'identifier la ou les transformation(s) effectuée(s). Il permet également comme décrit ultérieurement de reconstituer une suite de données dont le volume est identique à celui de la première suite (même nombre de valeurs numériques et même nombre de bits par valeur numérique.

Ainsi, les caractéristiques fonctionnelles (en nombre de valeurs par unité de temps et taille en bits par valeur) des données de la suite ainsi reconstituée sont les mêmes que celles des données de la première suite.

Cependant, en fonction de l'adaptation effectuée par le dispositif de transmission, la qualité des données de la suite reconstituée peut être inférieure et au maximum égale à la qualité des données initiales. La qualité peut être comprise comme étant une indication de la quantité d'information que l'on pourrait extraire à partir d'un volume des données.

Ainsi, le procédé de transmission permet le transfert en temps réel et sans perte de continuité d'un flux des données via un réseau dont la charge peut fluctuer.

Le réseau peut être un réseau public, un réseau mutualisé, un réseau partagé...

Aucune limitation n'est apportée au type du réseau.

Les données sont transmises selon un protocole de streaming réseau, situé au niveau de la couche de transport et au-dessus (au sens de couches du modèle OSI (Open Systems Interconnection)).

Selon un mode de réalisation particulier du procédé de transmission, la loi de sélection définit un nombre de valeurs numériques et/ou un nombre de bits des valeurs numériques de la séquence à transmettre.

Selon un mode de réalisation particulier, le procédé de transmission comporte une étape de comparaison de la valeur de charge estimée avec au moins une valeur seuil prédéfinie et la deuxième séquence est une première séquence modifiée ou non, en fonction du résultat de ladite comparaison.

La comparaison d'une valeur de charge mesurée à un instant courant avec une ou plusieurs valeurs de charge seuil est un moyen simple pour détecter une variation de charge du réseau.

En fonction du résultat de la comparaison, il est décidé de transmettre toutes les données d'une séquence prévue ou une séquence modifiée contenant seulement une partie de ces données
La comparaison avec une valeur de charge seuil permet par exemple de déterminer si le débit est estimé suffisant ou pas.

Selon un mode de réalisation particulier du procédé de transmission, la loi de sélection appliquée est choisie en fonction de la valeur de charge estimée parmi une pluralité de lois de sélection préalablement enregistrées respectivement en association avec au moins un critère relatif à au moins une valeur de seuil prédéfinie.

La prévision de plusieurs valeurs de charge seuil et de plusieurs lois de sélection, associées à des critères relatif à une ou plusieurs valeurs de charge seuil permet au dispositif de transmission d'appliquer une sélection des données adaptée pour obtenir des données dont le volume est réduit en adéquation avec la baisse du débit fourni par le réseau. Ainsi, il est possible d'appliquer une première opération de sélection réduisant faiblement le volume de donnée d'une première séquence prévue si l'engorgement du réseau est faible ou d'appliquer une deuxième opération de sélection réduisant fortement le volume de donnée d'une première séquence prévue si l'engorgement du réseau est fort.

Une des valeurs seuil peut également être prévue pour pouvoir appliquer une opération de transformation autre qu'une sélection, par exemple un filtrage ou un moyennage, lorsqu'il est détecté que le réseau est très fortement perturbé.

Le débit du flux transmis varie ainsi au cours du temps, à la hausse ou à la baisse en fonction des transformations appliquées.

Un nombre élevé de valeur de charge seuil permet une adaptation fine du débit du flux transmis. Ceci permet notamment de transmettre un flux de qualité maximale sans perte de la continuité du flux.

Selon un mode de réalisation particulier du procédé de transmission, la deuxième suite est transmise sous forme de paquets, un paquet contenant une zone d'entête et une zone de données, les valeurs numériques de la deuxième séquence étant incluses dans la zone de données et l'indicateur de traitement étant inclus dans la zone d'entête.

L'introduction de l'indicateur de traitement dans l'entête d'un paquet de données est un moyen simple pour signaler au dispositif qui reçoit les données que des modifications apportées aux données contenues dans le paquet.

Selon un mode de réalisation particulier du procédé de transmission, l'indicateur de traitement est transmis dans un canal de signalisation de la liaison de communication.

La transmission du l'indicateur de traitement est un autre moyen simple pour signaler une modification des données d'une séquence.

Selon un mode de réalisation particulier du procédé de transmission, le nombre de bits des valeurs numériques de la deuxième séquence est inférieur au nombre de bits des valeurs numériques de la première séquence et les valeurs numériques de la deuxième séquence contiennent les bits de poids fort des valeurs numériques de la première séquence.

La diminution de la taille de chaque valeur numérique, c'est-à-dire du nombre de bits de chaque valeur numérique, permet une diminution du volume de données transmise.

Seuls, les bits de poids forts sont transmis.

Le dispositif récepteur des données, connaissant le nombre de bits nominal des valeurs numériques peut obtenir des valeurs numériques comportant le nombre de bits initial, c'est-à-dire avant application de la loi de sélection par le dispositif de transmission, en ajoutant des bits de poids faible de valeur prédéfinie, par exemple de valeur nulle. Les valeurs obtenues seront du même ordre de grandeur que les valeurs initiales. La perte d'information est faible.

Selon un mode de réalisation particulier du procédé de transmission, les étapes d'estimation, de détermination et de transmission sont réitérées.

La réitération des étapes permet de s'adapter au mieux aux capacités de transport courante du réseau, c'est-à-dire à sa charge. Elle permet ainsi de diminuer le volume des données transmises dès la détection d'une baisse du débit ou au contraire de revenir au volume initial dès que le réseau n'est plus engorgé.

Selon un mode de réalisation particulier du procédé de transmission, lesdites valeurs numériques sont des échantillons d'au moins un signal radio.

L'invention se rapporte encore à un dispositif de transmission, via une liaison de communication, d'un flux de données représentant une deuxième suite ordonnée de valeurs numériques représentées respectivement par un nombre prédéfini de bits, ladite deuxième suite étant déterminée à partir d'une première suite ordonnée de valeurs numériques de taille prédéfinie, une séquence de valeurs numériques consécutives de la deuxième suite, dite deuxième séquence, étant obtenue à partir d'une séquence correspondante de valeurs numériques consécutives de la première suite, dite première séquence.

Selon l'invention, le dispositif de transmission comprend :
un module d'estimation configuré pour estimer, à un instant courant, une valeur de charge représentative d'une charge courante dudit réseau ;
un module de traitement configuré pour déterminer en fonction de la valeur de charge estimée, une deuxième séquence à transmettre au cours d'un intervalle de temps prédéfini suivant ledit instant courant, ladite deuxième séquence étant une première séquence correspondante de la première suite ou une séquence modifiée obtenue par application d'une loi de sélection aux bits de ladite première séquence; et
un module de transmission configuré pour transmettre ladite deuxième séquence et pour transmettre un indicateur de traitement signalant une modification de séquence, en cas de transmission d'une séquence modifiée.

Le dispositif de transmission bénéficie des mêmes avantages cités précédemment que le procédé de transmission.

L'invention se rapporte encore à un procédé d'obtention d'un flux de données représentant une troisième suite ordonnée de valeurs numériques représentées respectivement par un nombre prédéfini de bits.

Le procédé comporte les étapes suivantes, mises en oeuvre par un dispositif de réception :
réception, via un liaison de communication, d'au moins une séquence de valeurs numériques, dite deuxième séquence, d'un flux de données représentant une deuxième suite ordonnée de valeurs numériques et réception en cas de réception d'une séquence modifiée d'au moins un indicateur de traitement signalant une modification de séquence, ladite deuxième séquence étant déterminée en fonction d'une valeur de charge estimée, ladite deuxième séquence étant une séquence de valeurs numériques consécutives d'une première suite de valeurs numériques représentées respectivement par ledit nombre prédéfini de bits, dite première séquence, ou une séquence obtenue par application d'une loi de sélection aux bits de ladite première séquence ; et
détermination en fonction de ladite au moins une deuxième séquence, d'au moins une séquence de valeurs numériques de la troisième suite, dite troisième séquence, ladite troisième séquence étant la deuxième séquence ou une séquence obtenue par application d'une transformation prédéfinie à la deuxième séquence en fonction dudit indicateur de traitement.

Grâce à l'indicateur de traitement reçu en association des données des séquences, le dispositif d'obtention, récepteur du flux de données contenant la deuxième suite peut reconstruire une suite de données, appelée troisième suite, contenant autant de bits que la première suite.

La transformation appliquée en cas de signalement d'une séquence modifiée est une transformation prédéfinie en fonction de la loi de sélection appliquée.

L'indicateur de traitement peut indiquer quelle loi de sélection a été appliquée, par exemple sous la forme d'une valeur sélectionnée parmi plusieurs valeurs prédéfinies. Grâce à cette valeur, le dispositif sait alors quelle transformation appliquer parmi plusieurs transformations prédéfinies.

Dans le cas où le débit du réseau reste au débit nominal, la troisième suite obtenue est la première suite. Il n'y a alors aucune perte d'informations.

Lors d'une détection d'une augmentation de la charge du réseau, significative d'une baisse potentielle du débit du réseau, les séquences reçues sont des séquences modifiées. Les séquences correspondantes de la troisième suite sont des séquences reconstruites. Le volume des données de la troisième suite est celui de la première suite. Seuls quelques bits ajoutés peuvent être différents.

L'adaptation du volume de données transmises à la charge estimée du réseau permet de réduire la probabilité de perte de paquets et en conséquence la perte de continuité du flux.

La différence entre la première suite et la troisième suite est fonction des opérations de transformations appliquées à la première suite

L'invention se rapporte également à un dispositif d'obtention d'un flux de données représentant une troisième suite ordonnée de valeurs numériques représentées respectivement par un nombre prédéfini de bits.

Le dispositif de réception comprend notamment :
un module de réception configuré pour recevoir, via une liaison de communication, au moins une séquence de valeurs numériques, dite deuxième séquence, d'un flux de données représentant une deuxième suite ordonnée de valeurs numériques et d'au moins d'une indicateur de traitement signalant une modification de séquence, en cas de réception d'une séquence modifiée, ladite deuxième séquence étant déterminée en fonction d'une valeur de charge estimée, ladite deuxième séquence étant une séquence de valeurs numériques consécutives d'une première suite ordonnée de valeurs numériques représentées respectivement par ledit nombre prédéfini de bits, dite première séquence, ou une séquence obtenue par application d'une loi de sélection à ladite première séquence, ladite loi de sélection définissant un nombre de valeurs numériques et/ou un nombre de bits des valeurs numériques de la séquence de la deuxième suite.
un module de reconstitution configuré pour déterminer en fonction de ladite au moins une deuxième séquence, au moins une séquence de valeurs numériques d'une troisième suite, dite troisième séquence, ladite troisième séquence étant la deuxième séquence ou une séquence obtenue par application d'une transformation à la deuxième séquence en fonction dudit indicateur de traitement.

Le dispositif d'obtention bénéficie des mêmes avantages cités précédemment que le procédé d'obtention.

L'invention concerne également un système comportant un dispositif de transmission et un dispositif de réception tels que décrit précédemment.

Un mode d'invention non revendiqué se rapporte également à un produit programme d'ordinateur comprenant des instructions pour la mise en oeuvre d'un procédé de transmission ou d'un procédé d'obtention tel que décrit précédemment, lorsque ce programme est exécuté par un processeur.

Ce mode de réalisation non revendiqué concerne ainsi un logiciel ou programme, susceptible d'être exécuté par un ordinateur ou par un processeur de données, ce logiciel / programme comportant des instructions pour commander l'exécution des étapes d'un procédé de transmission ou d'un procédé d'obtention. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

Un mode d'invention non revendiqué concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant un système selon un premier mode de réalisation de l'invention,
- la figure 2 est un organigramme illustrant les différentes étapes d'un procédé de transmission et d'un procédé d'obtention selon un premier mode de réalisation de l'invention,
- la figure 3 est un organigramme illustrant les différentes étapes d'un procédé de transmission et d'un procédé d'obtention selon un premier exemple de réalisation de l'invention,
- la figure 4 est un schéma illustrant des suites d'échantillons obtenues selon un premier exemple de réalisation de l'invention,
- la figure 5 est un organigramme illustrant les différentes étapes d'un procédé de transmission et d'un procédé d'obtention selon un deuxième mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

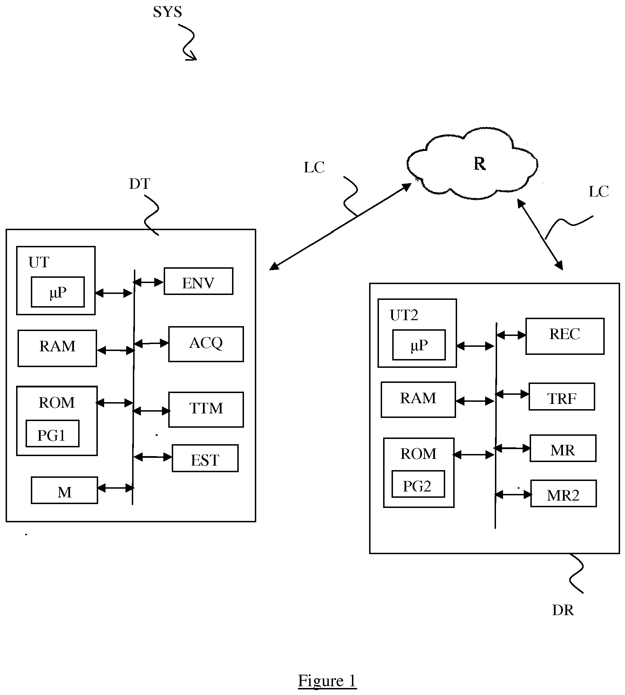

Un premier mode de réalisation d'un procédé de transmission et d'un procédé de réception va maintenant être décrit en référence aux figures 1 à 3.

En référence à la **figure 1****,** un système SYS comprend un dispositif de transmission DT et un dispositif de réception DR aptes à communiquer entre eux via un réseau de communication R.

Le réseau R est par exemple un réseau de télécommunication dans lequel les données sont transmises sous forme de paquets. De façon connue, un paquet comprend une zone d'entête et une zone de données, appelées généralement « données utiles ».

Le réseau R est par exemple un réseau de type Internet, un réseau de type Intranet, un réseau local....

Le dispositif de transmission DT et le dispositif de réception DR sont par exemple des équipements de type « ordinateur ».

Le dispositif de réception DR représente un dispositif d'obtention au sens de l'invention.

Le dispositif de transmission DT comporte de façon connue, notamment une unité de traitement UT équipée d'un microprocesseur, une mémoire morte de type ROM, une mémoire vive de type RAM.

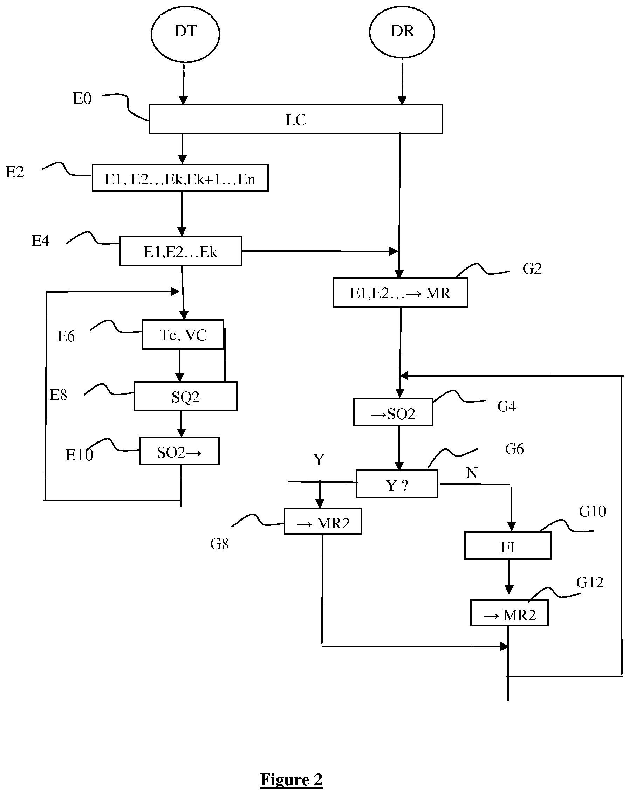

La mémoire morte de type ROM comporte des registres mémorisant un programme d'ordinateur PG1 comportant des instructions de programme adaptées à mettre en oeuvre un procédé de transmission selon un mode de réalisation de l'invention décrit ultérieurement en référence aux figures 2 à 5.

Le dispositif de transmission DT comporte également un module d'acquisition de données ACQ, un module d'estimation EST, un module de traitement TTM et un module d'émission ENV.

Le module d'acquisition ACQ est ici configuré pour obtenir en temps réel, des échantillons numérisés de signaux radio.

Ces échantillons sont par exemple transmis par un ou plusieurs dispositifs (non représentés) par exemple via une liaison de communication de type Wifi.

Les échantillons sont enregistrés au fur et à mesure de leur obtention par le module d'acquisition ACQ. Ils forment ainsi une suite ordonnée.

Les échantillons sont par exemple reçus à une cadence prédéfinie.

Egalement, à titre d'alternative, les échantillons sont enregistrés par un dispositif d'acquisition (non représenté) dans une mémoire accessible par le dispositif de transmission DT.

Les échantillons représentent des valeurs numériques au sens de l'invention.

Dans le mode de réalisation décrit, chaque échantillon se présente sous la forme d'une suite binaire.

La taille des échantillons est prédéfinie.

Par exemple, chaque échantillon est une suite de 24 bits.

Le module d'estimation EST est configuré pour déterminer une valeur représentative de la charge courante du réseau à un instant courant.

Le module d'émission ENV est configuré pour transmettre des données via le réseau R.

Le dispositif de réception DR comporte de façon connue, notamment une unité de traitement UT2 équipée d'un microprocesseur, une mémoire morte de type ROM, une mémoire vive de type RAM.

La mémoire morte de type ROM comporte des registres mémorisant un programme d'ordinateur PG2 comportant des instructions de programme adaptées à mettre en oeuvre un procédé d'obtention selon un mode de réalisation de l'invention décrit ultérieurement en référence aux figures 2 à 5.

Le dispositif de réception DR comporte également un module de réception de données REC et un module de reconstitution TRF.

Le module de réception REC est configuré pour recevoir en temps réel, via le réseau R, un flux de données contenant des paquets de données

Un premier mode de réalisation d'un procédé de transmission et d'un procédé d'obtention mis en oeuvre dans le système SYS, va maintenant être décrit en référence à la **figure 2****.**

Lors d'une étape préalable E0, une liaison de communication LC est initialisée entre le dispositif de transmission DT et le dispositif de réception DR.

Lors de cette étape d'initialisation, les dispositifs s'échangent des messages de signalisation pour établir la communication.

Par exemple, le dispositif de transmission DT détermine en fonction du dispositif de réception DR et des capacités du réseau R, un débit nominal D des données utiles qui seront transmises. Le dispositif de transmission DT transmet au dispositif de réception DR, le débit nominal des données utiles D ainsi que des informations relatives aux données utiles qui seront transmises, telles que par exemple un taux d'échantillonnage et le format des données utiles.

A titre d'alternative, le taux d'échantillonnage et/ou le format des données utiles sont transmis dans un ou plusieurs entêtes de paquets.

Lors d'une étape E2, des données E1, E2, ...En sont recueillies par le module d'acquisition ACQ du dispositif de transmission DT pendant un intervalle de temps IT1.

Les données recueillies se présentent sous les formes de valeurs numériques. Chaque valeur numérique est une succession de données binaires. La taille de chaque valeur numérique est prédéfinie. En d'autres termes, le nombre de bits représentant chaque valeur numérique recueillie est une valeur prédéfinie NB.

Les données recueillies sont par exemple des données issues d'une numérisation à la Shannon d'une bande de fréquence Radio.

Les valeurs numériques recueillies sont enregistrées au fur et à mesure dans une mémoire M du dispositif de transmission DT. La mémoire M est par exemple une mémoire de type FIFO (« First Input First Output »).

Dans le mode de réalisation décrit, les données enregistrées sont les données recueillies.

A titre d'alternative, les données recueillies sont filtrées avant enregistrement.

Les données recueillies forment ainsi une suite ordonnée et continue de valeurs numériques.

Dans le mode de réalisation décrit, chaque valeur numérique est un échantillon numérisé d'un signal radio.

Cependant, aucune limitation n'est attachée au type des valeurs numériques enregistrées.

Ainsi l'invention s'applique à tout type de données dans la mesure où ces données sont toutes de même type, de même format et sont exprimées par une suite binaire de NB bits.

Dans la suite de la description, ces données sont appelées indifféremment valeur numérique ou échantillon, les deux termes étant équivalents pour le mode de réalisation décrit.

Les valeurs numériques recueillies représentent une première suite numérique ordonnée S1 au sens de l'invention.

A titre d'alternative, les données acquises sont reçues sous forme d'un flux de données continu.

Lors d'une étape E4, réalisée parallèlement à l'étape E2, avec cependant un décalage temporel, le module de transmission ENV du dispositif de transmission DT transmet, via le réseau R, et plus particulièrement via la liaison de communication LC, à destination du dispositif de réception DR, les valeurs numériques enregistrées dans la mémoire M. Ces valeurs numériques sont transmises dans l'ordre de leur enregistrement. Ainsi, la première valeur numérique recueillie E1 est la première transmise.

De façon classique, les valeurs numériques sont encapsulées dans des paquets avant leur transmission. De façon connue, le nombre de valeurs numériques par paquets est défini lors de la phase d'initialisation E0.

Les valeurs numériques sont transmises en continu, au fur et à mesure de leur acquisition et de leur enregistrement dans la mémoire M du dispositif de transmission DT. Cependant, un léger décalage temporel nécessaire au traitement peut être observé.

Les valeurs numériques transmises lors de l'étape E4 sont par exemple les échantillons E1 à Ek avec k<n.

Les valeurs numériques transmises lors de l'étape E4 sont reçues par le module de réception REC du dispositif de réception DR lors d'une étape G2 et enregistrées dans une mémoire MR du dispositif de réception DR.

Lors d'une étape E6, le module d'estimation EST du dispositif de réception DR estime, c'est-à-dire détermine, une valeur de charge courante VC.

Dans le mode de réalisation décrit, l'étape E6 d'estimation est réalisée après l'étape E4 d'envoi des échantillons non modifiés E1, E2...Ek. A titre d'alternative, l'étape E4 n'est pas réalisée et l'étape E6 est mise en oeuvre avant toute transmission de données par le dispositif de traitement DT.

La valeur de charge VC est représentative de la charge du réseau, c'est-à-dire d'une capacité de transport courante du réseau R, de la bande passante disponible ou encore du débit courant du réseau.

La valeur de charge VC est par exemple déterminée à partir d'une ou plusieurs mesures de performance du réseau.

Dans le mode de réalisation décrit, la valeur de charge estimée est une valeur de débit courant du réseau R c'est-à-dire un volume de données utiles pouvant être transmises par le réseau
R pendant une unité de temps. La valeur de charge VC est par exemple exprimée sous la forme d'un nombre de bits par seconde.

De façon connue, lors de l'envoi de donnée sous forme de paquets, la couche réseau du dispositif de transmission DT répond plus ou moins rapidement en fonction de la capacité du réseau à transmettre les échantillons E1,E2....La valeur de charge VC est par exemple déterminée en fonction de la réactivité de la couche réseau à accepter l'envoi des échantillons.

A titre d'alternative, la valeur de charge VC est par exemple un nombre de bits que peut transmettre le réseau par unité de temps sans perte de qualité, c'est-à-dire sans perte de données entre l'émission et la réception.

Des méthodes connues permettent de déterminer une valeur de charge.

Par exemple, des méthodes utilisent le taux de remplissage d'une FIFO à l'émission ou à la réception afin de déterminer un état de congestion du réseau. Cet indicateur peut être utilisé pour estimer le débit disponible.

On peut par exemple citer le document de H. T. Le, V.D. Nguyen, P.N. Nam, T. C. Thang, A. T. Pham, intitulé "Buffer-based bitrate adaptation for adaptive http streaming", Proc. of IEEE ATC2013, pp. 33-38, Oct. 2013.

L'étape E6 est réalisée à un instant courant Te de l'intervalle de temps IT.

L'étape E6 est suivie d'une étape E8 lors de laquelle le module de traitement TTM du dispositif de transmission DT détermine une séquence SQ2 de valeurs numériques à transmettre pendant un intervalle de temps I2 suivant l'instant courant Te.

La séquence SQ2 représente une deuxième séquence au sens de l'invention.

La séquence SQ2 est déterminée en fonction d'une séquence SQ1 d'échantillons consécutifs de la première suite S1 qui n'ont pas encore été transmis.

On suppose par exemple que lors de la réalisation de l'étape E8, les échantillons E1 à Ek de la première suite S1 ont été transmis et que les échantillons suivants (Ek+1, Ek+2...) n'ont pas encore été transmis. La séquence SQ1 est par exemple la séquence constituée des échantillons Ek+1 à Ek+r.

La séquence SQ2 est également déterminée en fonction de la valeur de charge VC. En fonction de la valeur de charge estimée VC, la séquence SQ2 est soit la séquence SQ1, soit une séquence SQ1m.

Plus précisément, le module de traitement TTM du dispositif de transmission DT détermine si la séquence SQ1 doit être ou non modifiée en fonction d'au moins un critère prédéfini CR. Le critère CR est relatif à la valeur de charge VC.

La séquence SQ1M est obtenue par application d'une loi de sélection F prédéfinie à la séquence SQ1.

La loi de sélection F permet de réduire le volume des données à transmettre.

Le nombre de bits de la séquence SQ1m est inférieur au nombre de bits de la séquence SQ1.

La loi de sélection F est par exemple une loi de sélection définissant un nombre d'échantillons pour la séquence SQ2. En d'autres termes, la loi de sélection F est dans ce cas une loi permettant de sélectionner un nombre d'échantillons prédéfini parmi les échantillons d'une séquence, ici la séquence SQ1. Dans ce cas, la séquence SQ1m contient seulement certains échantillons de la séquence SQ1, par exemple un échantillon sur deux.

A titre d'alternative, la loi de sélection F est une loi définissant une taille des échantillons de la séquence SQ2, typiquement un nombre de bits des échantillons de la séquence SQ2. Dans ce cas, la séquence SQ1m contient autant d'échantillons que la séquence SQ1 mais le nombre de bits de chaque échantillon est inférieur au nombre de bits des échantillons de la séquence SQ1.

Egalement, à titre d'alternative, la loi de sélection F définit un nombre d'échantillons et un nombre de bits par échantillon pour les échantillons pour la séquence SQ2.

L'étape E8 est suivie d'une étape E10 lors de laquelle le module de transmission ENV du dispositif de transmission DT transmet la séquence SQ2.

Egalement, lors de l'étape E10, si la séquence SQ2 est la séquence modifiée SQ1m, un indicateur de traitement Y est transmis via le réseau de communication R et via la liaison de communication LC, en association avec la séquence SQ2.

L'indicateur de traitement Y est inséré dans l'entête de chaque paquet contenant des données de la séquence SQ1m.

L'indicateur de traitement Y permet de signaler au dispositif de réception DR que les échantillons du paquet sont des échantillons d'une séquence modifiée.

Dans le cas où la séquence SQ2 est la séquence SQ1, aucun indicateur de traitement n'est transmis. A titre d'alternative, un indicateur de traitement signalant que la séquence n'est pas modifiée est transmis, par exemple dans l'entête de chaque paquet contenant des échantillons d'une séquence non modifiée.

A titre d'alternative, seul le premier paquet contenant des échantillons d'une séquence modifiée contient l'indicateur de traitement Y. Dans ce cas, tant que l'entête des paquets ne contient pas d'information contraire, les échantillons transmis sont des échantillons d'une séquence modifiée.

A titre d'alternative, l'indicateur de traitement Y indique également le type de sélection appliqué aux données.

La séquence SQ2 est reçue par le module de réception REC du dispositif de réception DR lors d'une étape G4.

Les échantillons reçus sont enregistrés au fur et à mesure de leur réception par le dispositif de réception DR dans la mémoire MR.

Les étapes E6 à E10 et G4 sont réitérées ultérieurement, par exemple à un autre instant courant de l'intervalle de temps IT.

Les étapes E6 à E10 et G4 sont par exemple réitérées à intervalles de temps réguliers.

Le dispositif de réception DR reçoit ainsi successivement une pluralité de séquences SQ2.

Les données reçues lors de l'étape G2 et celles reçues lors des étapes G4 forment une seconde suite ordonnée S2 de valeurs numériques.

Lors d'une étape G6, le module de reconstitution TRF du dispositif de réception DR détermine si un indicateur de traitement signalant une modification des données du paquet par le dispositif de transmission DT est contenu dans l'entête du premier paquet de données reçu.

Dans le cas où l'entête ne contient pas d'indicateur de traitement ou contient un indicateur de traitement indiquant que les données ne sont pas modifiées, les échantillons du paquet sont enregistrés dans une mémoire MR2 du dispositif de réception DR sans subir de modification (étape G8).

Dans le cas où l'entête du paquet contient un indicateur de traitement Y indiquant une transformation des données du paquet, le module de reconstitution TRF du dispositif de réception DR applique aux données du paquet, une transformation FI visant à obtenir un volume de données identiques au volume de données avant application de la loi de sélection F par le dispositif de transmission DT (étape G10).

La transformation FI est une fonction mathématique prédéfinie, associée à la loi de sélection F. La transformation FI est une fonction qui permet de pallier au mieux à la transformation effectuée par le dispositif de transmission DT.

Par exemple, si lors de l'application de la fonction F1, le taux d'échantillonnage a été modifié par décimation, la transformation associée FI peut être une interpolation.

Si lors de l'application de la fonction F1, les échantillons ont été modifiés par arrondi ou troncature, la transformation associée FI peut être une fonction de type « zero-padding ».

Si la loi de sélection appliquée F vise à sélectionner un échantillon sur deux, la transformation FI consiste par exemple à ajouter un échantillon identique après chaque échantillon du paquet.

Si la loi de sélection F permet la sélection des m bits de poids fort parmi les NB bits de chaque échantillon, un échantillon obtenu par la transformation FI est un échantillon de NB bits dans lequel les bits de poids fort sont les m bits de l'échantillon reçu et les autres bits sont positionnés à une valeur prédéfinie, par exemple une valeur nulle.

Les échantillons obtenus suite à l'application de la transformation FI sont enregistrés, lors d'une étape G12, dans la mémoire MR2, à la suite des échantillons préalablement enregistrés dans cette mémoire.

Un indicateur peut être enregistré en association avec les données enregistrées pour signaler l'application d'une transformation, c'est-à-dire pour signaler que les données peuvent ne pas être exactement les données obtenues par le dispositif de transmission DT.

Les étapes G6 à G12 sont réitérées pour chaque paquet reçu.

Ainsi, des séquences d'échantillons consécutifs, modifiées ou non, sont enregistrées au fur et à mesure dans la mémoire MR2 du dispositif de réception DR.

Les données ainsi enregistrées dans la mémoire MR2 forment une suite ordonnée et continue S3 d'échantillons représentés respectivement sur un nombre NB de bits.

La suite S3 obtenue représente une troisième suite au sens de l'invention.

Dans le mode de réalisation décrit, les paquets transmis contenant des séquences d'échantillons non modifiées ne contiennent pas d'indicateur de traitement.

A titre d'alternative, un indicateur de traitement est inséré dans l'entête du premier paquet ou de tous les paquets consécutifs contenant des séquences d'échantillons non modifiées avant envoi. Cet indicateur de traitement signale dans ce cas qu'aucune sélection n'a été réalisée.

L'insertion d'un indicateur de traitement signalant qu'aucune sélection n'a été effectuée est notamment indispensable pour signaler un premier paquet sans sélection consécutif à un ou plusieurs paquets de données de séquence modifiée dans le mode de réalisation où un indicateur de traitement est inséré uniquement dans un premier paquet de données de séquence modifiée.

L'étape E6 d'estimation de la valeur de charge courante peut être réitérée une ou plusieurs fois. Lors de chaque réitération, la valeur de charge courante est mise à jour. L'étape E6 est par exemple renouvelée à intervalles réguliers.

Dans le mode de réalisation décrit, l'étape E6 est réalisée après transmission de k échantillons. A titre d'alternative, l'étape E6 peut être réalisée avant la transmission du premier échantillon E1.

Les étapes E0 à E10 mises en oeuvre par le dispositif de transmission DT représentent des étapes du procédé de transmission selon un mode de réalisation de l'invention.

Les étapes E0 et G2 à G12 mises en oeuvre par le dispositif de réception DR représentent des étapes du procédé d'obtention selon un mode de réalisation de l'invention.

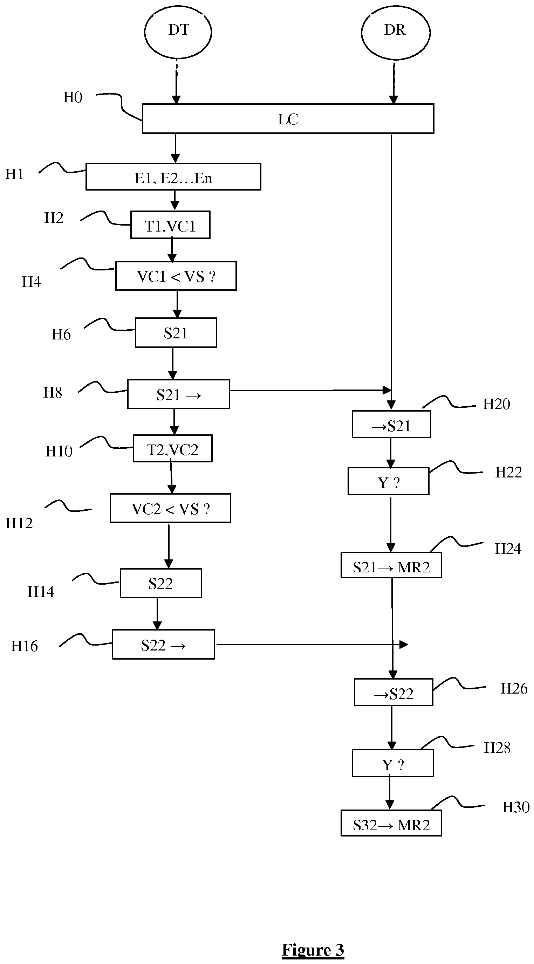

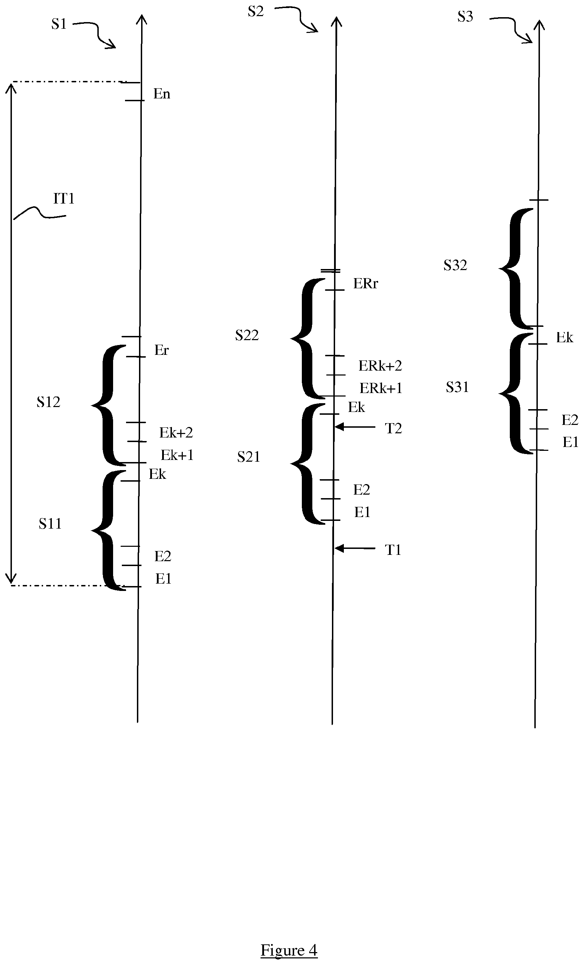

Un premier exemple de réalisation du procédé de transmission et du procédé d'obtention mis en oeuvre dans le système SYS va maintenant être décrit en relation avec les figures 3 et 4.

Dans cet exemple de réalisation, une seule loi de sélection F2 est prédéfinie. La loi de sélection F2 est par exemple une loi permettant de sélectionner les 12 bits de poids forts de chaque échantillon.

Une valeur de charge seuil VS a également été prédéfinie et enregistrée dans une mémoire du dispositif de transmission DT.

Dans le mode de réalisation décrit, la valeur de charge courante VC et la valeur seuil VS sont des valeurs de débit, exprimées par exemple en nombre de bits par seconde. Le débit courant est inférieur à un débit nominal D si la valeur de charge courante VC est inférieure à la valeur de seuil VS. Le débit nominal est le débit auquel les données sont transmises sans perte, notamment lorsque le réseau n'est pas congestionné. Le débit nominal D est par exemple un débit négocié lors de l'initialisation de la liaison de communication.

A titre d'alternative, il peut être considéré que le débit courant est inférieur au débit nominal D si la valeur de charge courante est supérieure à une valeur de seuil prédéfinie.

En référence à la **figure 3****,** lors d'une étape H0, une liaison de communication LC est initialisée entre le dispositif de transmission DT et le dispositif de réception DR.

Lors d'une étape H1, N échantillons E1,E2.. .En sont recueillis par le dispositif de transmission DT au cours d'un intervalle de temps IT1. Ces N échantillons forment une première suite ordonnée S1.

La taille des échantillons de la suite S1 est par exemple de 24 bits.

La **figure 4** est un schéma illustrant la suite S1, une première suite S2 obtenue à partir de la suite S1 et une troisième suite S3 obtenue par reconstitution à partir de la suite S2.

La suite S1 comporte une pluralité de séquences consécutives S 11, S12 ... Chaque séquence comporte un nombre prédéfini d'échantillons recueillis par le dispositif de transmission DT.

Lors d'une étape H2, réalisée à un instant courant T1 de l'intervalle de temps IT1, une valeur de charge VC1 est estimée par le dispositif de transmission DT.

Lors d'une étape H4, la valeur de charge VC1 estimée est comparée à la valeur de seuil VS prédéfinie.

La valeur de charge VC1 est par exemple telle que VS<VC1.

L'étape H4 est suivie d'une étape H6 lors de laquelle le dispositif de transmission DT détermine une séquence S21 en fonction du résultat de la comparaison et en fonction d'une séquence d'échantillons de la suite S1.

La séquence considérée de la suite S1 est ici une première séquence S11 constituée des échantillons E1 à Ek.

La valeur de charge courante VC1 étant supérieure à la valeur de seuil VS, la séquence S21 est identique à la séquence S 11.

La séquence S21 est transmise par le dispositif de transmission DT dans un ou plusieurs paquets de données, lors d'une étape H8.

Lors d'une étape H10, réalisée à un deuxième instant courant T2 de l'intervalle de temps IT1, une valeur de charge VC2 est estimée.

Lors d'une étape H12, la valeur de charge VC2 est comparée à la valeur de seuil VS.

La valeur de charge VC2 est par exemple telle que VS>VC2.

L'étape H12 est suivie d'une étape H14 lors de laquelle le dispositif de transmission DT détermine une séquence S22 à transmettre à partir de la séquence d'échantillons S12 de la suite S1.

La séquence S12 est constituée des k échantillons Ek+1, Ek+2...Er suivant les échantillons de la séquence S11 précédemment traitée de la première suite S1.

La valeur de charge courante VC2 étant inférieure ou égale à la valeur de seuil VS, le dispositif de transmission DT applique la loi de sélection prédéfinie F2 à une pluralité d'échantillons consécutifs et non encore transmis de la première suite S1, c'est-à-dire ici aux échantillons Ek+1 et suivants de la séquence S12.

La séquence S22 contient k échantillons ERk+1, ERk+2...ERr.

Chaque échantillon ERi de la séquence S22 est constitué des 12 bits les plus forts de l'échantillon Ei de la séquence S12.

La loi de sélection prédéfinie F2 est appliquée aux échantillons avant leur transmission, et plus précisément avant leur encapsulage en paquets.

La séquence S22 est transmise par le dispositif de transmission DT dans un ou plusieurs paquets de données, lors d'une étape H16.

Lors de l'étape H16, un indicateur de traitement Y est inséré dans chaque paquet de la séquence S22 transmis.

L'indicateur de traitement Y signale que la loi de sélection F2 a été appliquée au paquet.

Les séquences S21, S22... forment une deuxième suite ordonnée S2.

La deuxième suite S2 est illustrée sur la figure 4.

Comme illustré sur la figure 4, les échantillons d'une séquence de la deuxième suite S2 peuvent être déterminés et transmis au fur et à mesure de l'acquisition des échantillons de la séquence correspondante de la première suite S1. Ainsi, par exemple, les premiers échantillons ERk+1, ERk+2 de la séquence S22 peuvent être transmis via la liaison de communication LC, avant l'acquisition par le dispositif de transmission DT des derniers échantillons Er-1, Er de la séquence S12 de la première suite S1.

Les étapes d'estimation, de comparaison et de détermination sont ensuite réitérées une ou plusieurs fois.

Le dispositif de réception DR reçoit le ou les paquets transmis par le dispositif de transmission DT.

Il reçoit ainsi lors d'une étape H20, un ou plusieurs paquets contenant les échantillons de la séquence S21.

Lors d'une étape H22, le dispositif de réception DR analyse l'entête des paquets reçus lors de l'étape H20 et détecte qu'aucun indicateur de traitement n'y figure.

Lors d'une étape H24, le dispositif de réception DR enregistre les données contenues dans les paquets, c'est-à-dire les échantillons E1, E2...Ek de la séquence S11 dans une mémoire MR2 du dispositif de réception DR.

Les échantillons E1 à Ek représentent une séquence S31 d'échantillons d'une troisième suite S3.

Lors d'une étape H26, le dispositif de réception DR reçoit un ou plusieurs paquets contenant les échantillons de la séquence S22 transmis lors de l'étape H16.

Lors d'une étape H28, le dispositif de réception DR analyse l'entête des paquets reçus lors de l'étape H26 et détecte qu'ils contiennent l'indicateur de traitement Y.

Lors d'une étape H30, le dispositif de réception DR détermine une séquence de données S32 à partir des données de la séquence S22.

Pour cela, le dispositif de réception DR applique une transformation FI2 aux données de la séquence S22.

Dans cet exemple de réalisation, la transformation FI2 vise à reconstituer des échantillons de 24 bits. Pour cela, chaque échantillon de la séquence S22 est par exemple complété de 12 bits de poids faible de valeur nulle.

La séquence S32 contient ainsi autant de bits que la séquence correspondante S12 de la suite S1.

Les séquences S31, S32. ..constituent une troisième suite S3 au sens de l'invention.

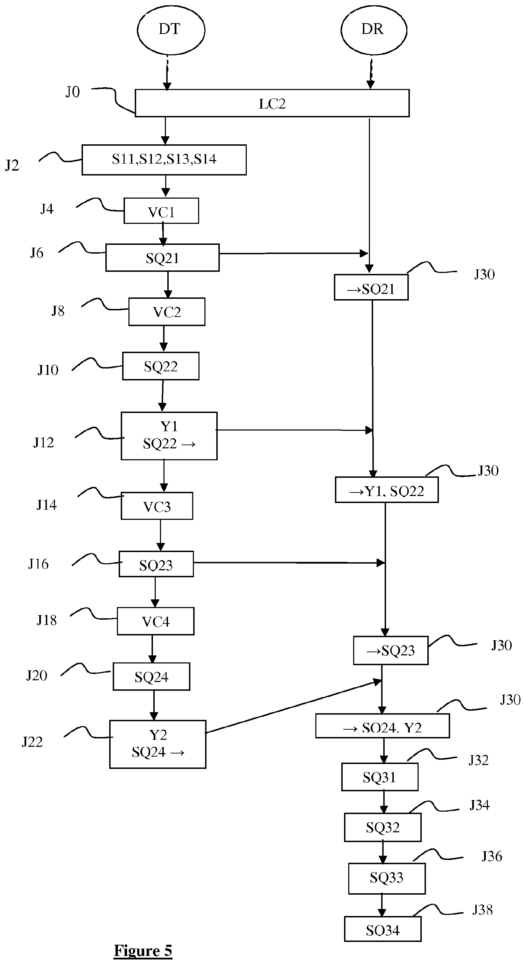

Un deuxième mode de réalisation du procédé de transmission et du procédé d'obtention mis en oeuvre dans le système SYS va maintenant être décrit en relation avec la figure 5.

Lors d'une étape préalable, plusieurs lois de sélection, par exemple quatre, ont été prédéfinies. Des données définissant chaque loi de sélection sont enregistrées respectivement en association avec un critère relatif à au moins une valeur de charge seuil prédéfinie, dans une mémoire du dispositif de transmission DT.

Une loi de sélection F1 est par exemple « sélectionner deux échantillons sur trois » et un premier critère CR1 associé est « la valeur de charge estimée est comprise entre une deuxième valeur de charge seuil V2 et une première valeur de charge seuil V1.

Une loi de sélection F2 est par exemple « sélectionner les 12 bits de poids fort de chaque échantillon » et un deuxième critère CR2 associé est la valeur de charge estimée est comprise entre une troisième valeur de charge seuil V3 et la deuxième valeur de charge seuil V2.

Une loi de sélection F3 est par exemple « sélectionner un échantillon sur deux et sélectionner les 12 bits de poids fort de chaque échantillon» et un troisième critère CR3 associé est la valeur de charge estimée est comprise entre une quatrième valeur de charge seuil V4 et la troisième valeur de charge seuil V3.

Une loi de sélection F3 est par exemple « sélectionner un échantillon sur deux et sélectionner les 12 bits de poids fort de chaque échantillon après filtrage » et un quatrième critère CR4 associé est la valeur de charge estimée est inférieure à la quatrième valeur de charge seuil V4.

Dans cet exemple de réalisation, les valeurs de charge seuil V1, V2, V3 et V4 sont des valeurs de débit.

Il est supposé que V4<V3<V2<V1<D, D représentant une valeur de débit nominal.

Lorsque le débit du réseau R est à la valeur nominale D, tous les échantillons recueillis par le dispositif de transmission DT sont transmises en temps réel et en continu sans perte de données.

En référence à la **figure 5****,** lors d'une étape préalable J0, une liaison de communication LC2 est initialisée entre les dispositifs de transmission DT et le dispositif de réception DR.

Lors d'une étape J2, similaire à l'étape E2 du premier mode de réalisation précédemment décrit, des données sont recueillies par le module d'acquisition ACQ du dispositif de transmission DT pendant un intervalle de temps IT1.

Les valeurs numériques recueillies représentent une première suite numérique ordonnée S1 au sens de l'invention.

La première suite S1 contient une pluralité d'échantillons obtenus par le dispositif de transmission DT, pendant l'intervalle de temps IT1. La suite S1 comporte ici des séquences SQ11, SQ12, SQ13, SQ14 d'échantillons obtenus successivement. Chacune de ces séquences contient par exemple 10 échantillons.

Lors d'une étape J4, le dispositif de transmission DT estime, c'est-à-dire détermine, à un instant courant T1 de l'intervalle de temps IT1, une valeur de charge VC1. La valeur de charge VC1 est représentative d'une capacité de transport du réseau R. La valeur de charge VC1 est, dans le mode de réalisation décrit, une valeur de débit courant du réseau R.

La valeur VC1 estimée est par exemple telle que V1<VC1<D, D étant un débit nominal, par exemple un débit négocié lors de l'établissement de la liaison de communication LC2.

Lors d'une étape J6, le dispositif de transmission détermine si un des critères préenregistrés est respecté par la valeur de charge VC1. Pour cela, la valeur de charge VC1 est comparée aux valeurs de charge seuil pré-enregistrées V1, V2, V3 et V4.

Le dispositif de transmission DT détermine ensuite une séquence SQ21 de valeurs numériques à transmettre.

La séquence SQ21 est déterminée en fonction de la séquence SQ11 d'échantillons consécutifs de la première suite S1.

La valeur de charge VC1 estimée étant comprise entre les valeurs V1 et D, aucun critère prédéfini n'est respecté et aucune loi de sélection n'est appliquée aux échantillons de la séquence SQ11. La séquence SQ21 déterminée est la séquence SQ11.

La séquence SQ21 est ensuite transmise pendant un intervalle de temps I1, via la liaison LC2.

Lors d'une étape J8, le dispositif de transmission DT détermine à un deuxième instant courant T2, une valeur de charge VC2. La valeur de charge VC2 est par exemple mesurée peu avant la fin de l'intervalle de temps I1.

La valeur de charge VC2 estimée est par exemple telle que V2<VC2<V1.

Lors d'une étape J10, le dispositif de transmission DT vérifie si un des critères préenregistrés est respecté par la valeur de charge VC2. Puis, il détermine une séquence SQ22 de valeurs numériques.

La séquence SQ22 est déterminée en fonction de la séquence SQ12 d'échantillons consécutifs de la première suite S1.

Le critère CR1 étant respecté par la valeur de charge VC2, la loi de sélection F1est appliquée aux échantillons de la séquence SQ12.

La séquence SQ22 est la séquence SQ12 dans laquelle deux échantillons parmi trois échantillons consécutifs sont sélectionnés.

La séquence SQ22 est ensuite transmise via la liaison LC2 lors d'une étape J12.

Un indicateur de traitement Y1 est inséré dans chaque entête du ou des paquets de la séquence S22 avant transmission.

L'indicateur de traitement Y1 signale que la loi de sélection F1 a été appliquée au paquet.

L'étape J12 est réalisée pendant un intervalle de temps I3 consécutif à l'intervalle de temps I2.

Lors d'une étape J14, réalisée par exemple peu avant la fin de l'intervalle de temps I2, le dispositif de transmission DT détermine à un troisième instant courant T3, une valeur de charge VC3.

La valeur VC3 estimée est par exemple telle que V 1 < VC3 <D.

Lors d'une étape J16, le dispositif de transmission DT détermine une séquence SQ23 de valeurs numériques en fonction d'une séquence SQ13 d'échantillons consécutifs de la première suite S1.

Aucun des critères prédéfinis CR1, CR2, CR3 et CR4 n'étant respecté par la valeur de charge VC3, aucune loi de sélection n'est appliquée aux échantillons de la séquence SQ13 et la séquence SQ23 est la séquence SQ13.

La séquence SQ23 est ensuite transmise pendant un intervalle de temps I3, via la liaison LC2. L'intervalle I3 est consécutif à l'intervalle I2.

Lors d'une étape J18, le dispositif de transmission DT détermine à un instant courant T4, une valeur de charge VC4. La valeur de charge VC4 est par exemple mesurée peu avant la fin de l'intervalle de temps I3.

La valeur VC4 estimée est par exemple telle que V3<VC4<V2.

Lors d'une étape J20, le dispositif de transmission DT détermine une séquence SQ24 de valeurs numériques en fonction d'une séquence SQ14 d'échantillons consécutifs de la première suite S1.

Le critère CR2 étant respecté par la valeur de charge VC2, la séquence S24 est obtenue par application de la loi de sélection F2 aux échantillons de la séquence SQ14.

La séquence SQ24 est ensuite transmise via la liaison LC2 lors d'une étape J22.

Egalement lors de l'étape J22, un indicateur de traitement Y2 est inséré dans chaque entête de paquet de la séquence SQ24 avant transmission.

L'indicateur de traitement Y2 signale que la loi de sélection F2 a été appliquée au paquet.

Les séquences SQ21, SQ22, SQ23 et SQ24 représentent des deuxièmes séquences au sens de l'invention. Ces séquences forment ici une deuxième suite ordonnée de valeurs numériques.

Les deuxièmes séquences SQ21, SQ22, SQ23 et SQ24 sont reçues par le dispositif de réception DT au fur et à mesure de leur transmission (étapes J30).

Suite à la réception de la séquence SQ21, le dispositif de réception DR détecte, par analyse de l'entête du ou des paquets reçus, qu'aucun indicateur de traitement n'y figure et détermine une séquence SQ31 identique à la séquence SQ21 reçue (étape J32).

Le dispositif de réception DR enregistre ensuite les données de la séquence SQ31 dans une mémoire MR2 du dispositif de réception DR.

Suite à la réception de la séquence SQ22, le dispositif de réception DR détecte, par analyse de l'entête du ou des paquets reçus, la présence de l'indicateur de traitement Y1 (étape J34).

Puis, il détermine une séquence SQ32. La séquence SQ32 est obtenue par application d'une transformation FI1 associée à la loi de sélection F1.

La transformation FI1 est une fonction mathématique prédéfinie associée à la loi de sélection F1.

La séquence SQ32 contient par exemple les deux premiers échantillons de la séquence SQ22, suivis du deuxième échantillon de la séquence SQ22, puis les troisième et quatrième échantillons de la séquence SQ22 suivis du quatrième échantillon de la séquence SQ22...La répétition des 2^{ème}, 4éme... échantillons permet d'obtenir une séquence SQ32 contenant le même nombre d'échantillons que la séquence correspondante SQ31 de la première suite S1.

Puis, le dispositif de réception DR enregistre les données de la séquence SQ32 dans la mémoire MR2.

Suite à la réception de la séquence SQ23, le dispositif de réception DR détecte, par analyse de l'entête du ou des paquets reçus, qu'aucun indicateur de traitement n'y figure et détermine une séquence SQ33 identique à la séquence SQ23 reçue (étape J36).

Les données de la séquence SQ33 sont ensuite enregistrées dans la mémoire MR.

Suite à la réception de la séquence SQ24, le dispositif de réception DR détecte, par analyse de l'entête du ou des paquets reçus, la présence de l'indicateur de traitement Y2 (étape J38).

Puis, le dispositif de réception DR détermine une séquence SQ34. La séquence SQ34 est obtenue par application d'une transformation FI2 associée à la loi de sélection F2.

La transformation FI2 est une fonction mathématique prédéfinie associée à la loi de sélection F2.

La séquence SQ34 contient par exemple les échantillons de la séquence SQ24 complétés respectivement par 12 bits de poids faible de valeur nulle.

Le dispositif de réception DR enregistre ensuite les données de la séquence SQ34 dans la mémoire MR2.

La séquence SQ34 contient ainsi autant de bits que la séquence correspondante SQ14 de la suite S1.

Les séquences SQ31, SQ32, SQ33 et SQ34 sont des séquences d'échantillons consécutifs de la troisième suite S3.

L'invention peut par exemple être mise en oeuvre dans un système non revendiqué comprenant un premier dispositif et un deuxième dispositif aptes à communiquer via une liaison de communication d'un réseau. Dans ce système, le premier dispositif est par exemple un dispositif apte à recevoir en temps réel un premier flux de données et à transmettre au deuxième dispositif, via la liaison de communication, un deuxième flux.

Le premier flux est par exemple transmis par un serveur.

Le débit nominal du premier flux est par exemple un débit D1.

Le deuxième dispositif est par exemple un dispositif apte à recevoir en temps réel, via la liaison de communication, le deuxième flux de données et à transmettre par exemple à un terminal d'utilisateur, un troisième flux.

La liaison de communication est configurée pour transférer les données du premier flux au deuxième dispositif, au fur et à mesure qu'elles parviennent au premier dispositif.

Ainsi, le premier flux est transféré sans modification lorsqu'il n'y a pas de perturbation dans le réseau.

Dans ce cas, le deuxième dispositif retransfère, en temps réel, le flux reçu, c'est-à-dire le premier flux au terminal d'utilisateur.

Lorsqu'à un instant courant, le premier dispositif détecte une baisse de débit de la liaison de communication, il applique aux données avant transmission de celles-ci une opération visant à réduire le volume de ces données, comme expliqué précédemment.

Lors de la réception de ces données, le deuxième dispositif applique à ces données une opération visant à obtenir un volume de données identique au volume initial.

Le flux transmis à l'utilisateur peut être moins précis pendant certains intervalles temporels que le premier flux. Un indicateur signalant les séquences reconstruites peut être transmis au terminal de l'utilisateur.

## Revendications

1. Procédé de transmission, via une liaison de communication (LC) d'un réseau de télécommunications, d'un flux de données contenant une deuxième suite ordonnée de valeurs numériques, ladite deuxième suite (S2) étant déterminée à partir d'une première suite ordonnée (S1) de valeurs numériques représentées chacune par un nombre prédéfini de bits; une séquence de valeurs numériques consécutives de la deuxième suite, dite deuxième séquence (SQ2) étant obtenue à partir d'une séquence correspondante de valeurs numériques consécutives de la première suite, dite première séquence (SQ1) **caractérisé en ce que** le procédé comporte les étapes suivantes, mises en oeuvre par un dispositif de transmission (DT) :
estimation (E6), à un instant courant, d'une valeur de charge (VC) représentative d'une charge courante de ladite liaison de communication (LC) dudit réseau ;
détermination (E8) en fonction du résultat de la comparaison de ladite valeur de charge courante estimée de ladite liaison de communication avec au moins une valeur de seuil prédéfinie, de la deuxième séquence (SQ2) à transmettre au cours d'un intervalle de temps prédéfini suivant ledit instant courant, ladite deuxième séquence (SQ2) étant une séquence modifiée (SQ1M) obtenue par application, en fonction du résultat de ladite comparaison, d'une fonction de sélection (F) aux bits de ladite première séquence (SQ1);
transmission (E10) de ladite deuxième séquence (SQ2) et transmission d'un indicateur de traitement (Y) signalant une modification de séquence.

2. Procédé de transmission selon la revendication 1 dans lequel ladite fonction de sélection définit un nombre de valeurs numériques et/ou un nombre de bits des valeurs numériques de la séquence à transmettre ;

3. Procédé de transmission selon l'une des revendications précédentes dans lequel la fonction de sélection appliquée est choisie en fonction de la valeur de charge estimée parmi une pluralité de fonction de sélection préalablement enregistrées respectivement en association avec un critère relatif à au moins une valeur de seuil prédéfinie.

4. Procédé de transmission selon l'une des revendications précédentes dans lequel la deuxième suite est transmise sous forme de paquets, un paquet contenant une zone d'entête et une zone de données, et dans lequel les valeurs numériques de la deuxième séquence sont incluses dans la zone de données et l'indicateur de traitement est inclus dans la zone d'entête.

5. Procédé de transmission selon l'une des revendications 1 à 3 dans lequel ledit indicateur de traitement est transmis dans un canal de signalisation.

6. Procédé de transmission selon l'une des revendications précédentes dans lequel le nombre de bits des valeurs numériques de la deuxième séquence est inférieur au nombre de bits des valeurs numériques de la première séquence et dans lequel les valeurs numériques de la deuxième séquence contiennent les bits de poids fort des valeurs numériques de la première séquence.

7. Procédé de transmission selon l'une des revendications précédentes dans lequel les étapes d'estimation, de détermination et de transmission sont réitérées.

8. Dispositif de transmission (DT), via une liaison de communication (LC) d'un réseau de télécommunications, d'un flux de données représentant une deuxième suite ordonnée (S2) de valeurs numériques, ladite deuxième suite étant déterminée à partir d'une première suite ordonnée (S 1) de valeurs numériques représentées chacune par un nombre prédéfini de bits; une séquence de valeurs numériques consécutives de la deuxième suite, dite deuxième séquence, étant obtenue à partir d'une séquence correspondante de valeurs numériques consécutives de la première suite, dite première séquence,
**caractérisé en ce qu'**il comprend :
un module d'estimation (EST) configuré pour estimer, à un instant courant, une valeur de charge (VC) représentative d'une charge courante de ladite liaison de communication dudit réseau,
un module de traitement (TTM) configuré pour déterminer en fonction du résultat de la comparaison de ladite valeur de charge courante estimée de ladite liaison de communication avec au moins une valeur de seuil prédéfinie, une deuxième séquence (SQ2) à transmettre au cours d'un intervalle de temps prédéfini suivant ledit instant courant, ladite deuxième séquence étant une séquence modifiée (SQ1M) obtenue par application, en fonction du résultat de ladite comparaison, d'une fonction de sélection (F) aux bits de ladite première séquence ; et
un module de transmission configuré pour transmettre ladite deuxième séquence et un indicateur de traitement.

9. Procédé d'obtention d'un flux de données représentant une troisième suite ordonnée (S3) de valeurs numériques représentées chacune par un nombre prédéfini de bits,
**caractérisé en ce que** le procédé comporte les étapes suivantes, mises en oeuvre par un dispositif de réception :
réception (G4), via une liaison de communication (LC) d'un réseau de télécommunications, d'au moins une séquence (SQ2) de valeurs numériques, dite deuxième séquence, d'un flux de données représentant une deuxième suite ordonnée (S2) de valeurs numériques, et réception d'au moins un indicateur de traitement (Y) signalant une modification de séquence, ladite deuxième séquence étant déterminée en fonction du résultat de la comparaison d'une valeur de charge estimée (VC) de ladite liaison de communication au moment de sa transmission avec au moins une valeur de seuil prédéfinie,
ladite deuxième séquence étant une séquence (SQ1M) obtenue par application, en fonction du résultat de ladite comparaison, d'une fonction de sélection (F) aux bits d'une première séquence (SQ1) ; et
détermination (G8, G12) en fonction de ladite au moins une deuxième séquence (SQ2), au moins une séquence, dite troisième séquence (SQ3), de valeurs numériques de la troisième suite, ladite troisième séquence étant une séquence obtenue par application à la deuxième séquence d'une transformation (FI) en fonction dudit indicateur de traitement.

10. Dispositif d'obtention (DT) d'un flux de données représentant une troisième suite ordonnée (S3) de valeurs numériques représentées chacune par un nombre prédéfini de bits, **caractérisé en ce qu'**il comprend :
un module de réception (REC) configuré pour recevoir, via une liaison de communication (LC) d'un réseau de télécommunications, au moins une séquence de valeurs numériques, dite deuxième séquence, d'un flux de données représentant une deuxième suite ordonnée (S2) de valeurs numériques et d'au moins d'une indicateur de traitement (Y) signalant une modification de séquence, ladite deuxième séquence étant déterminée en fonction du résultat de la comparaison d'une valeur de charge estimée (VC) de ladite liaison de communication au moment de sa transmission avec au moins une valeur de seuil prédéfinie, ladite deuxième séquence étant une séquence (SQ1M) obtenue par application, en fonction du résultat de ladite comparaison, d'une fonction de sélection (F) aux bits d'une première séquence (SQ1) ; et
un module de reconstitution (TRF) configuré pour déterminer en fonction de ladite au moins une deuxième séquence, au moins une séquence, dite troisième séquence (SQ3), de valeurs numériques de la troisième suite (S3), ladite troisième séquence étant une séquence obtenue par application d'une transformation (FI) à la deuxième séquence en fonction dudit indicateur de traitement.

## Patentansprüche

1. Verfahren zur Übertragung, über eine Kommunikationsverbindung (LC) eines Telekommunikationsnetzes, eines Datenstroms, der eine zweite geordnete Folge von digitalen Werten enthält, wobei die zweite Folge (S2) anhand einer ersten geordneten Folge (S1) von digitalen Werten bestimmt wird, die jeweils durch eine vorgegebene Anzahl von Bits repräsentiert werden; wobei eine Sequenz von aufeinanderfolgenden digitalen Werten der zweiten Folge, zweite Sequenz (SQ2) genannt, anhand einer entsprechenden Sequenz von aufeinanderfolgenden digitalen Werten der ersten Folge, erste Sequenz (SQ1) genannt, erhalten wird, **dadurch gekennzeichnet, dass** das Verfahren die folgenden, von einer Übertragungsvorrichtung (DT) ausgeführten Schritte umfasst:
Schätzen (E6), zu einem aktuellen Zeitpunkt, eines Lastwerts (VC), der für eine aktuelle Last der Kommunikationsverbindung (LC) des Netzes repräsentativ ist;
Bestimmen (E8), in Abhängigkeit vom Ergebnis des Vergleichs des geschätzten aktuellen Lastwerts der Kommunikationsverbindung mit mindestens einem vorgegebenen Schwellenwert, der zweiten Sequenz (SQ2), die während eines auf den aktuellen Zeitpunkt folgenden vorgegebenen Zeitintervalls zu übertragen ist, wobei die zweite Sequenz (SQ2) eine geänderte Sequenz (SQ1M) ist, die durch Anwenden, in Abhängigkeit vom Ergebnis des Vergleichs, einer Auswahlfunktion (F) auf die Bits der ersten Sequenz (SQ1) erhalten wird;
Übertragen (E10) der zweiten Sequenz (SQ2) und Übertragen eines Verarbeitungsindikators (Y), der eine Sequenzänderung signalisiert.

2. Verfahren zur Übertragung nach Anspruch 1, bei dem die Auswahlfunktion eine Anzahl von digitalen Werten und/oder eine Anzahl von Bits der digitalen Werte der zu übertragenden Sequenz definiert.

3. Verfahren zur Übertragung nach einem der vorhergehenden Ansprüche, bei dem die angewandte Auswahlfunktion in Abhängigkeit von dem geschätzten Lastwert unter einer Mehrzahl von Auswahlfunktionen gewählt wird, die zuvor jeweils unter Verknüpfung mit einem Kriterium bezüglich mindestens eines vorgegebenen Schwellenwerts gespeichert wurden.

4. Verfahren zur Übertragung nach einem der vorhergehenden Ansprüche, bei dem die zweite Folge in Form von Paketen übertragen wird, wobei ein Paket einen Headerbereich und einen Datenbereich enthält, und bei dem die digitalen Werte der zweiten Sequenz im Datenbereich enthalten sind und der Verarbeitungsindikator im Headerbereich enthalten ist.

5. Verfahren zur Übertragung nach einem der Ansprüche 1 bis 3, bei dem der Verarbeitungsindikator in einem Signalisierungskanal übertragen wird.

6. Verfahren zur Übertragung nach einem der vorhergehenden Ansprüche, bei dem die Anzahl von Bits der digitalen Werte der zweiten Sequenz geringer ist als die Anzahl von Bits der digitalen Werte der ersten Sequenz und bei dem die digitalen Werte der zweiten Sequenz die höchstwertigen Bits der digitalen Werte der ersten Sequenz enthalten.

7. Verfahren zur Übertragung nach einem der vorhergehenden Ansprüche, bei dem die Schritte des Schätzens, des Bestimmens und des Übertragens wiederholt werden.

8. Vorrichtung zur Übertragung (DT), über eine Kommunikationsverbindung (LC) eines Telekommunikationsnetzes, eines Datenstroms, der eine zweite geordnete Folge (S2) von digitalen Werten repräsentiert, wobei die zweite Folge anhand einer ersten geordneten Folge (S1) von digitalen Werten bestimmt wird, die jeweils durch eine vorgegebene Anzahl von Bits repräsentiert werden;
wobei eine Sequenz von aufeinanderfolgenden digitalen Werten der zweiten Folge, zweite Sequenz genannt, anhand einer entsprechenden Sequenz von aufeinanderfolgenden digitalen Werten der ersten Folge, erste Sequenz genannt, erhalten wird,
**dadurch gekennzeichnet, dass** sie umfasst:
ein Schätzmodul (EST), das dazu ausgestaltet ist, zu einem aktuellen Zeitpunkt einen Lastwert (VC) zu schätzen, der für eine aktuelle Last der Kommunikationsverbindung des Netzes repräsentativ ist;
ein Verarbeitungsmodul (TTM), das dazu ausgestaltet ist, in Abhängigkeit vom Ergebnis des Vergleichs des geschätzten aktuellen Lastwerts der Kommunikationsverbindung mit mindestens einem vorgegebenen Schwellenwert eine zweite Sequenz (SQ2) zu bestimmen, die während eines auf den aktuellen Zeitpunkt folgenden vorgegebenen Zeitintervalls zu übertragen ist, wobei die zweite Sequenz eine geänderte Sequenz (SQ1M) ist, die durch Anwenden, in Abhängigkeit vom Ergebnis des Vergleichs, einer Auswahlfunktion (F) auf die Bits der ersten Sequenz erhalten wird; und
ein Übertragungsmodul, das dazu ausgestaltet ist, die zweite Sequenz und einen Verarbeitungsindikator zu übertragen.

9. Verfahren zum Erhalten eines Datenstroms, der eine dritte geordnete Folge (S3) von digitalen Werten repräsentiert, die jeweils durch eine vorgegebene Anzahl von Bits repräsentiert werden,
**dadurch gekennzeichnet, dass** das Verfahren die folgenden, von einer Empfangsvorrichtung ausgeführten Schritte umfasst:
Empfangen (G4), über eine Kommunikationsverbindung (LC) eines Telekommunikationsnetzes, mindestens einer Sequenz (SQ2) von digitalen Werten, zweite Sequenz genannt, eines Datenstroms, der eine zweite geordnete Folge (S2) von digitalen Werten repräsentiert, und Empfangen mindestens eines Verarbeitungsindikators (Y), der eine Sequenzänderung signalisiert, wobei die zweite Sequenz in Abhängigkeit vom Ergebnis des Vergleichs eines geschätzten Lastwerts (VC) der Kommunikationsverbindung zum Zeitpunkt ihrer Übertragung mit mindestens einem vorgegebenen Schwellenwert bestimmt wird;
wobei die zweite Sequenz eine Sequenz (SQ1M) ist, die durch Anwenden, in Abhängigkeit vom Ergebnis des Vergleichs, einer Auswahlfunktion (F) auf die Bits einer ersten Sequenz (SQ1) erhalten wird; und
Bestimmen (G8, G12), in Abhängigkeit von der mindestens einen zweiten Sequenz (SQ2), mindestens einer Sequenz, dritte Sequenz (SQ3) genannt, von digitalen Werten der dritten Folge,
wobei die dritte Sequenz eine Sequenz ist, die durch Anwenden einer Transformation (FI) auf die zweite Sequenz in Abhängigkeit von dem Verarbeitungsindikator erhalten wird.

10. Vorrichtung zum Erhalten (DT) eines Datenstroms, der eine dritte geordnete Folge (S3) von digitalen Werten repräsentiert, die jeweils durch eine vorgegebene Anzahl von Bits repräsentiert werden,
**dadurch gekennzeichnet, dass** sie umfasst:
ein Empfangsmodul (REC), das dazu ausgestaltet ist, über eine Kommunikationsverbindung (LC) eines Telekommunikationsnetzes mindestens eine Sequenz von digitalen Werten, zweite Sequenz genannt, eines Datenstroms, der eine zweite geordnete Folge (S2) von digitalen Werten repräsentiert, und mindestens einen Verarbeitungsindikators (Y), der eine Sequenzänderung signalisiert, zu empfangen, wobei die zweite Sequenz in Abhängigkeit vom Ergebnis des Vergleichs eines geschätzten Lastwerts (VC) der Kommunikationsverbindung zum Zeitpunkt ihrer Übertragung mit mindestens einem vorgegebenen Schwellenwert bestimmt wird, wobei die zweite Sequenz eine Sequenz (SQ1M) ist, die durch Anwenden, in Abhängigkeit vom Ergebnis des Vergleichs, einer Auswahlfunktion (F) auf die Bits einer ersten Sequenz (SQ1) erhalten wird; und
ein Rekonstruktionsmodul (TRF), das dazu ausgestaltet ist, in Abhängigkeit von der mindestens einen zweiten Sequenz mindestens eine Sequenz, dritte Sequenz (SQ3) genannt, von digitalen Werten der dritten Folge (S3) zu bestimmen,
wobei die dritte Sequenz eine Sequenz ist, die durch Anwenden einer Transformation (FI) auf die zweite Sequenz in Abhängigkeit von dem Verarbeitungsindikator erhalten wird.

## Claims

1. Method for transmitting, via a communication link (LC) of a telecommunications network, a data stream containing a second ordered succession of digital values, said second succession (S2) being determined from a first ordered succession (S1) of digital values each represented by a predefined number of bits, a sequence of consecutive digital values of the second succession, called the second sequence (SQ2), being obtained from a corresponding sequence of consecutive digital values of the first succession, called the first sequence (SQ1), **characterized in that** the method comprises the following steps, which are implemented by a transmitting device (DT) :
estimating (E6), at a current time, a load value (VC) representative of a current load on said communication link (LC) of said network;
determining (E8), depending on the result of the comparison of said estimated current load value of said communication link with at least one predefined threshold value, the second sequence (SQ2) to be transmitted in a predefined time interval following said current time, said second sequence (SQ2) being a modified sequence (SQ1M) obtained by applying, depending on the result of said comparison, a selection law (F) to the bits of said first sequence (SQ1);
transmitting (E10) said second sequence (SQ2) and transmitting a processing indicator (Y) signalling a sequence modification.

2. Transmitting method according to Claim 1, wherein said selection law defines a number of digital values and/or a number of bits of the digital values of the sequence to be transmitted.

3. Transmitting method according to one of the preceding claims, wherein the applied selection law is chosen, depending on the estimated load value, from among a plurality of selection laws stored beforehand respectively in association with a criterion relative to at least one predefined threshold value.

4. Transmitting method according to one of the preceding claims, wherein the second succession is transmitted in the form of packets, a packet containing a header zone and a data zone, and wherein the digital values of the second sequence are included in the data zone and the processing indicator is included in the header zone.

5. Transmitting method according to one of Claims 1 to 3, wherein said processing indicator is transmitted in a signalling channel.

6. Transmitting method according to one of the preceding claims, wherein the number of bits of the digital values of the second sequence is lower than the number of bits of the digital values of the first sequence and wherein the digital values of the second sequence contain the most-significant bits of the digital values of the first sequence.

7. Transmitting method according to one of the preceding claims, wherein the estimating, determining and transmitting steps are reiterated.

8. Device (DT) for transmitting, via a communication link (LC) of a telecommunications network, a data stream representing a second ordered succession (S2) of digital values, said second succession being determined from a first ordered succession (S1) of digital values each represented by a predefined number of bits, a sequence of consecutive digital values of the second succession, called the second sequence, being obtained from a corresponding sequence of consecutive digital values of the first succession, called the first sequence,
**characterized in that** it comprises:
an estimating module (EST) configured to estimate, at a current time, a load value (VC) representative of a current load on said communication link of said network;
a processing module (TTM) configured to determine, depending on the result of the comparison of said estimated current load value of said communication link with at least one predefined threshold value, a second sequence (SQ2) to be transmitted in a predefined time interval following said current time, said second sequence being a modified sequence (SQ1M) obtained by applying, depending on the result of said comparison, a selection law (F) to the bits of said first sequence; and
a transmitting module configured to transmit said second sequence and a processing indicator.

9. Method for obtaining a data stream representing a third ordered succession (S3) of digital values each represented by a predefined number of bits, **characterized in that** the method comprises the following steps, which are implemented by a receiving device:
receiving (G4), via a communication link (LC) of a telecommunications network, at least one sequence (SQ2) of digital values, called the second sequence, of a data stream representing a second ordered succession (S2) of digital values, and receiving at least one processing indicator (Y) signalling a sequence modification, said second sequence being determined depending on the result of the comparison of an estimated load value (VC) of said communication link, at the moment of its transmission, with at least one predefined threshold value, said second sequence being a sequence (SQ1M) obtained by applying, depending on the result of said comparison, a selection law (F) to the bits of a first sequence (SQ1); and
determining (G8, G12), depending on said at least one second sequence (SQ2), at least one sequence, called the third sequence (SQ3), of digital values of the third succession, said third sequence being a sequence obtained by applying, to the second sequence, a transformation (FI) depending on said processing indicator.

10. Device (DT) for obtaining a data stream representing a third ordered succession (S3) of digital values each represented by a predefined number of bits, **characterized in that** it comprises:
a receiving module (REC) configured to receive, via a communication link (LC) of a telecommunications network, at least one sequence of digital values, called the second sequence, of a data stream representing a second ordered succession (S2) of digital values and at least one processing indicator (Y) signalling a sequence modification, said second sequence being determined depending on the result of the comparison of an estimated load value (VC) of said communication link, at the moment of its transmission, with at least one predefined threshold value, said second sequence being a sequence (SQ1M) obtained by applying, depending on the result of said comparison, a selection law (F) to the bits of a first sequence (SQ1); and
a reconstructing module (TRF) configured to determine, depending on said at least one second sequence, at least one sequence, called the third sequence (SQ3), of digital values of the third succession (S3), said third sequence being a sequence obtained by applying a transformation (FI) to the second sequence depending on said processing indicator.
